# EUROPÄISCHE PATENTSCHRIFT

(11) **EP 0 346 515 B1**
(45) Veröffentlichungstag und Bekanntmachung des Hinweises auf die Patenterteilung: **19.05.1993**
(21) Anmeldenummer: 88109590.5
(22) Anmeldetag: 16.06.1988
(51) Int. Cl.: G01S 15/10, G01S 7/52

(54) **Verfahren und Vorrichtung zur Bestimmung der Ankunftzeit eines Schallimpulses**
Method and apparatus for determining the time of arrival of a sound pulse
Procédé et dispositif pour déterminer le temps d'arrivée d'une impulsion sonore

(43) Veröffentlichungstag der Anmeldung: 20.12.1989
(73) Patentinhaber: HONEYWELL AG, 63067 Offenbach (DE)
(72) Erfinder: Pietschmann, Erhard, Dipl.-Ing., D-6000 Frankfurt 60 (DE)
(74) Vertreter: Herzbach, Dieter, Dipl.-Ing.

(56) Entgegenhaltungen:
- EP-A- 0 180 652
- EP-A- 0 224 606
- EP-A- 0 225 938
- EP-A- 0 259 512
- WO-A-81/02472
- DE-A- 3 022 857

## Beschreibung

Die vorliegende Erfindung bezieht sich auf ein Verfahren nach dem Gattungsbegriff des Patentanspruches 1 sowie auf eine Vorrichtung zur Durchführung dieses Verfahrens.

Ein derartiges Verfahren ist aus der EP-OS 0 259 512 bekannt. Dort wird in einer Sende/Empfangsschaltung für einen akustischen Wandler der Sendewandler mit unterschiedlichen modulierten Trägerfrequenzen angesteuert, wobei zuerst die Ansteuerung auf die Eigenfrequenz des Wandlers abgestimmt ist und sodann eine Ansteuerung des Wandlers mit einer außerhalb der Eigenfrequenz liegenden Frequenz erfolgt. Beim Empfang des reflektierten Signales wird das Ausrasten einer Phasenverriegelungsschaltung detektiert, wobei bei einem Meßobjekt im Nahbereich ein aktives Ausrasten infolge der Frequenzumschaltung erfolgt und bei einem Meßobjekt im Weitbereich ein passives Ausrasten dadurch erfolgt, daß die Empfangsamplitude aufgrund der außerhalb der Eigenfrequenz liegenden Frequenz unterhalb des Rauschpegels liegt. Dieses bekannte Verfahren arbeitet mit großer Genauigkeit, wenn das gesendete Signal an einem einzigen Objekt mit glatter Oberfläche reflektiert wird, da dann der Ausrastzeitpunkt der verwendeten Phasenverriegelungsschaltung genau festliegt. Sind mehrere Objekte hintereinander, ein abgestuftes Objekt oder auch nur ein Objekt mit rauher Oberfläche vorhanden, so wird das Meßverfahren unsicher, da dann im Ausrastzeitpunkt bezüglich einer reflektierten Signalkomponente noch andere Signalkomponenten anstehen können, die sich noch im Haltebereich der Phasenverriegelungsschaltung befinden. Die Phasenverriegelungsschaltung rastet dann unter Umständen erst aus, wenn das Empfangssignal unter den Rauschpegel abgesunken ist.

Es ist daher die Aufgabe der vorliegenden Erfindung, das Verfahren der eingangs genannten Art so zu verbessern, daß unabhängig von der Beschaffenheit des detektierten Objektes eine eindeutige Abstandsmessung mit geringem Fehler möglich ist. Die Lösung dieser Aufgabe gelingt gemäß den kennzeichnenden Merkmalen des Patentanspruches 1. Weitere Ausgestaltungen des erfindungsgemäßen Verfahrens sowie eine Vorrichtung zur Durchführung dieses Verfahrens sind den Unteransprüchen entnehmbar.

Anhand der Figuren der beiliegenden Zeichnung sei im folgenden das erfindungsgemäße Verfahren sowie eine Schaltungsanordnung zur Durchführung dieses Verfahrens näher erläutert. Hierbei zeigen:
- Fig. 1a: den Verlauf zweier elektrischer Anregungssignale mit unterschiedlichen Frequenzen und der dadurch bewirkten akustischen Abstrahlung eines akustischen Wandlers;
- Fig. 1b: den Verlauf des akustischen Schalldruckes über der Frequenz in bezug auf den Haltebereich einer Phasenverriegelungsschaltung;
- Fig. 2a: den Verlauf von akustischen Empfangssignalen bei einem rauhen oder strukturierten Objekt im Nahbereich;
- Fig. 2b: den Verlauf von akustischen Empfangssignalen bei einem rauhen oder strukturierten Objekt im Weitbereich;
- Fig. 3: ein Blockschaltbild einer Sendeschaltung; und
- Fig. 4: ein Blockschaltbild einer erfindungsgemäßen Empfangsschaltung.
- Fig. 4a, b: Diagramme zur Erläuterung der Funktion der Empfangsschaltung gemäß Fig. 4.

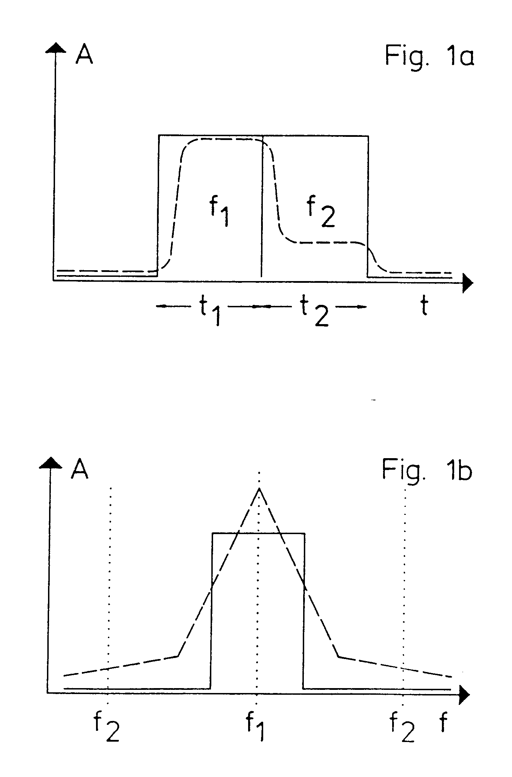

Gemäß Fig. 1a wird zunächst während einer Zeit t1 ein elektroakustischer Wandler mit einer auf die Eigenfrequenz des Wandlers abgestimmten Modulationsfrequenz f1 angesteuert, um sodann unmittelbar darauf den elektroakustischen Wandler mit einer Modulationsfrequenz f2 anzusteuern, die deutlich außerhalb der Eigenfrequenz des elektroakustischen Wandlers liegt. In Fig. 1a ist hierbei lediglich die Einhüllende der Modulation angedeutet. Die sich hierbei ergebende akustische Abstrahlung ist in Fig. 1a gestrichelt eingezeichnet.

Gemäß Fig. 1b ergibt sich bezogen auf die Frequenz ein akustischer Schalldruck, der ein deutliches Maximum bei der Eigenfrequenz f1 des Wandlers aufweist, so daß dieser Schalldruck, wenn der Haltebereich einer frequenzselektiven Einrichtung, wie beispielsweise einer Phasenverriegelungsschaltung auf diese Eigenfrequenz ebenfalls abgestimmt ist, was gestrichelt eingezeichnet ist, leicht detektiert werden kann.

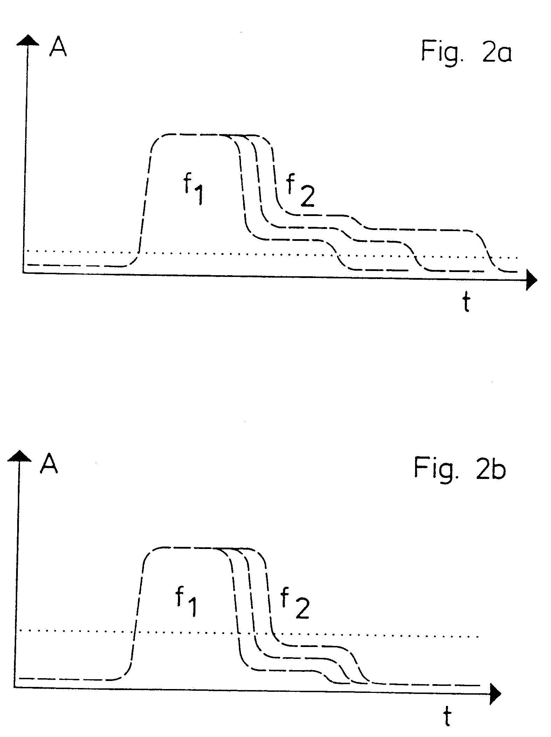

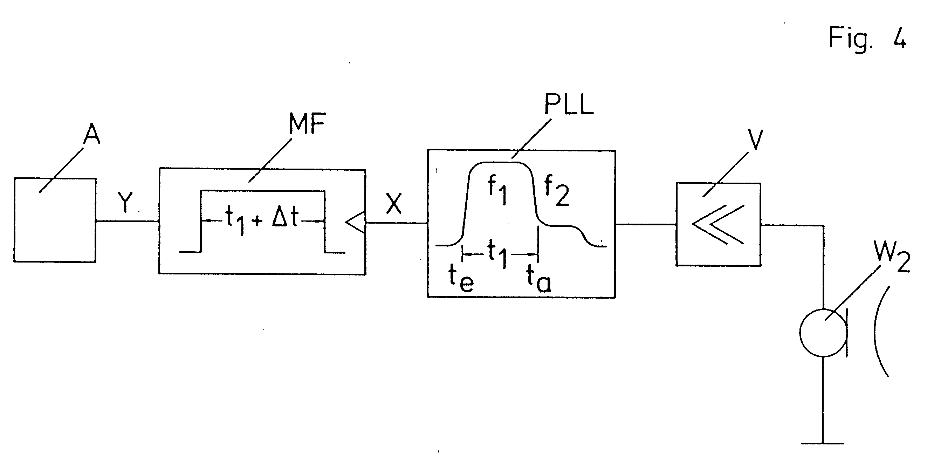

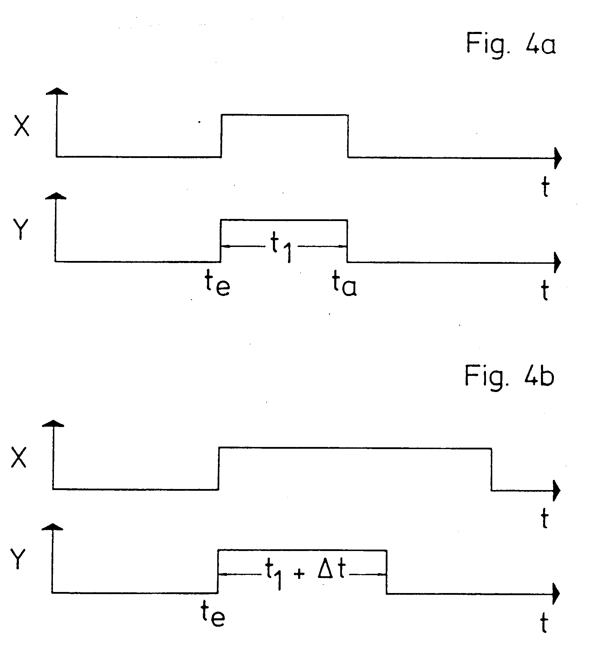

Wenn das durch die Schallwellen angestrahlte Meßobjekt im Nahbereich der Sende/Empfangsschaltung liegt und eine gewisse Strukturierung bzw. Rauhigkeit aufweist, so ergeben sich die in Fig. 2a dargestellten Verläufe des akustischen Empfangssignals, wobei die auf die Eigenfrequenz f1 des Wandlers abgestimmten Schallwellen deutlich über einem punktiert eingezeichneten Rauschpegel liegen, während die durch die daneben liegende Frequenz f2 erzeugten Schallwellen eine deutlich verringerte Amplitude aufweisen aber ebenfalls noch über dem Rauschpegel liegen. Wäre nur ein Empfangssignal vorhanden, so könnte die Phasenverriegelungsschaltung bei dem einzig vorliegenden Frequenzwechsel selektiv ausrasten und es ergäbe sich kein Problem. Da jedoch Mehrfachechos vorliegen, muß in diesem Fall die Messung auf andere Weise erfolgen als dies in der EP-OS 0 259 512 beschrieben ist. Dies soll später anhand von Fig. 4 erläutert werden.

Gemäß Fig. 2b liegen bei einem strukturierten Meßobjekt im Weitbereich die Amplituden der akustischen Empfangssignale bei der außerhalb der Eigenfrequenz f1 liegenden Frequenz f2 bereits unter dem punktiert eingezeichneten Rauschpegel, so daß im Falle nur eines Empfangssignales eine Phasenverriegelungsschaltung passiv ausrasten würde, da die Amplitude dieses einzigen Signales nicht mehr detektierbar ist. Bei mehreren Empfangssignalen ergibt sich jedoch kein eindeutiges Ausrasten und es muß auch in diesem Fall von der Schaltungsanordnung gemäß Fig. 4 Gebrauch gemacht werden.

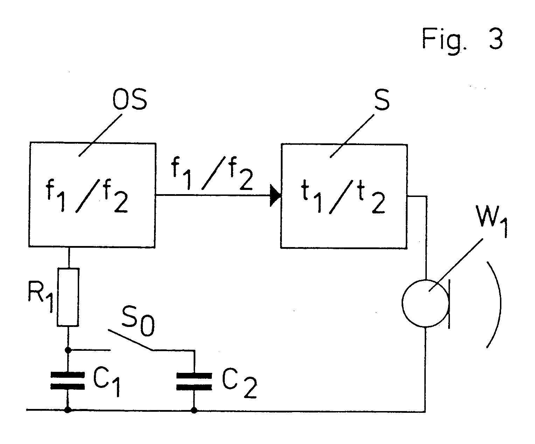

Fig. 3 zeigt die aus der EP-OS 0 259 512 bekannte Sendeschaltung. Maßgebliches Bauteil ist ein in seiner Frequenz umschaltbare Oszillator OS, wobei z.B. die Anregung in der Eigenfrequenz f1 durch ein RC-Glied, bestehend aus dem Widerstand R1 und dem Kondensator C1, bestimmt wird und die deutlich außerhalb der Eigenfrequenz liegende Frequenz f2 erzeugt wird, indem dem Kondensator C1 ein weiterer Kondensator C2 über einen Schalter S0 parallelgeschaltet wird. Ein dem Oszillator OS nachgeschalteter Schalter S wird zyklisch während der Zeiten t1 und t2 geschlossen, so daß der nachgeschaltete elektroakustische Wandler W1 mit einer entsprechend modulierten Trägerfrequenz während dieser Zeiten angesteuert wird. Vorzugsweise sind die Zeiten t1 und t2 gleich lang gewählt. Das von dem Wandler W1 abgestrahlte akustische Signal wird an einem nicht dargestellten Objekt reflektiert.

Das reflektierte Signal wird gemäß Fig. 4 von einem elektroakustischen Wandler W2 empfangen, wobei dieser Wandler mit dem Sendewandler identisch sein kann. Das von dem Wandler W2 empfangene akustische Signal wird in ein elektrisches Signal umgesetzt und nach Verstärkung in einem Verstärker V einer Phasenverriegelungsschaltung PLL zugeführt. Die Phasenverriegelungsschaltung PLL erzeugt beim Einrasten im Zeitpunkt tₑ einen Impuls X (Fig. 4a), mit dessen Vorderflanke ein nachgeschaltetes Monoflop MF gesetzt wird. Beim Ausrasten der Phasenverriegelungsstufe im Zeitpunkt tₐ wird das Monoflop MF zwangsweise zurückgesetzt, wodurch der Impuls Y am Ausgang des Monoflops MF den gleichen Verlauf wie der Eingangsimpuls X aufweist (Fig. 4a). Eine dem Monoflop MF nachgeschaltete Auswertestufe A wertet die abfallende Flanke des Impulses Y aus.

Die Impulsdauer des Monoflops MF, d.h. die Zeit, während der es im ungestörten Betrieb nach seiner Triggerung den gesetzten Zustand beibehält, entspricht der Modulationsdauer t₁ des Wandlers plus einer geringen Zeitdauer Δt, wobei diese geringe Zeitdauer Δt entsprechend der längstmöglichen Einrastverzögerung der Phasenverriegelungsschaltung gewählt ist.

Wenn nun die Phasenverriegelungsschaltung PLL im Zeitpunkt tₐ nicht ausrastet und für eine unbestimmte Zeitdauer eingerastet bleibt, so kippt das Monoflop MF nach Ablauf seiner Impulsdauer t1 + Δt zurück, wobei die abfallende Flanke von der Auswertestufe A ausgewertet wird. Auch bei weiterhin anstehendem Impuls X erhält man somit gemäß Fig. 4b um Δt gegenüber tₐ verschoben eine abfallende Flanke des Impulses Y, so daß auch im Fall von Mehrfachechos, wo der Zeitpunkt tₐ nicht detektiert werden kann, ein auswertbares Signal erhalten wird.

Die Arbeitsweise der Empfangsschaltung gemäß Fig. 4 ist demnach folgende: Ergibt sich an einer glatten Oberfläche ein eindeutiger Echoimpuls, so wird dessen Empfang durch aktives oder passives Ausrasten der Phasenverriegelungsschaltung PLL detektiert, wie dies aus der EP-OS 0 259 512 bekannt ist. Gleichzeitig wird aber das Einrasten der Phasenverriegelungsschaltung PLL im Zeitpunkt tₑ detektiert und um eine vorbestimmte Verzögerungszeit t1 + Δt verzögert zur Auswertung herangezogen, für den Fall, daß Mehrafchechos vorliegen.

## Patentansprüche

1. Verfahren zur Bestimmung der Ankunftszeit eines von einem elektroakustischen Wandler (W1,W2) ausgesendeten und von einem Objekt reflektierten Schallimpulses an dem Wandler, bei welchem Verfahren
- der Wandler während vorgegebener Sendeperioden mit einem impulsmodulierten Schwingungssignal erregt wird, wobei die Trägerfrequenz des Schwingungssignals in jeder Sendeperiode jeweils während einer ersten Modulationsdauer t1 durch die Eigenfrequenz f1 des elektroakustischen Wandlers (W1,W2) vorgegeben ist und danach während einer anschließenden zweiten Modulationsdauer t2 durch eine Frequenz f2 außerhalb der Eigenfrequenz f1 des Wandlers vorgegeben ist;
- die vom Wandler (W1,W2) während des Empfangs eines reflektierten Schallimpulses erzeugten elektrischen Ausgangssignale einer Phasenverriegelungsschaltung (PLL) zugeführt werden, deren Haltebereich auf die Eigenfrequenz f1 des Wandlers abgestimmt ist, wobei die Phasenverriegelungsschaltung (PLL) beim Empfang von sowohl Einfach- als auch Mehrfach-Echosignalen bei der Vorderflanke der empfangenen Einfach- bzw. Mehrfach-Echosignalen zu einem jeweiligen Einrastzeitpunkt te einrastet und beim Empfang von Einfach-Echosignalen beim Frequenzwechsel der empfangenen Einfach-Echosignale von der Frequenz f₁ zur Frequenz f₂ zu einem jeweiligen späteren Ausrastzeitpunkt ta ausrastet; und
- zur Bestimmung der Ankunftszeit bei Einfach-Echosignalen der jeweilige Ausrastzeitpunkt ta ausgewertet wird, **dadurch gekennzeichnet,** daß zur Bestimmung der Ankunftszeit bei Mehrfach-Echosignalen der jeweilige Einrastzeitpunkt te zuzüglich einer einstellbaren Verzögerungszeit t1+Δt ausgewertet wird, wobei Δt gleich der längstmöglichen Einrastverzögerung der Phasenverriegelungsschaltung (PLL) gewählt ist.

2. Verfahren nach Anspruch 1, **dadurch gekennzeichnet,** daß die einstellbare Verzögerungszeit mindestens so groß wie die erste Modulationsdauer t1 ist.

3. Vorrichtung zur Durchführung des Verfahrens nach Anspruch 1 mit
einem elektroakustischen Wandler (W₁,W₂),
einem impulsmodulierten Oszillator (OS) zur Erregung des Wandlers (W1,W2) jeweils während vorgegebener Sendeperioden, wobei der Oszillator (OS) Einrichtungen (So) zur Umschaltung seiner Trägerfrequenz aufweist, so daß die Trägerfrequenz in jeder Sendeperiode jeweils während einer ersten Modulationsdauer t1 durch die Eigenfrequenz f1 des elektroakustischen Wandlers (W1,W2) vorgegeben ist und danach während einer anschließenden zweiten Modulationsdauer t2 durch eine Frequenz f2 außerhalb der Eigenfrequenz f1 des Wandlers vorgegeben ist;
einer an den Wandler angeschlossenen Empfängerschaltung (V,PLL,A) für das vom Wandler bei Beaufschlagung mit Schallwellen abgegebene elektrische Schwingungssignal, die eine auf die Eigenfrequenz f1 des Wandlers abgestimmte Phasenverriegelungsschaltung (PLL) aufweist, wobei die Phasenverriegelungsschaltung (PLL) beim Empfang von sowohl Einfach- als auch Mehrfach-Echosignalen bei der Vorderflanke der empfangenen Einfach- bzw. Mehrfach-Echosignalen zu einem jeweiligen Einrastzeitpunkt te einrastet und beim Empfang von Einfach-Echosignalen beim Frequenzwechsel der empfangenen Einfach-Echosignale von der Frequenz f1 zur Frequenz f2 zu einem jeweiligen späteren Ausrastzeitpunkt ta ausrastet, und eine Auswerteschaltung (A) zur Bestimmung des Ankunftzeitpunktes eines vom Wandler auf der Trägerfrequenz empfangenen Schallimpulses, die zur Bestimmung der Ankunftszeit bei Einfach-Echosignalen den jeweiligen Ausrastzeitpunkt ta auswertet,
**dadurch gekennzeichnet,**
- daß zwischen der Phasenverriegelungsschaltung (PLL) und der Auswerteschaltung (A) ein Monoflop (MF) angeordnet ist, dessen ungestörte Impulsdauer gleich einer einstellbaren Verzögerungszeit t1 + Δt ist, wobei Δt gleich der längstmöglichen Einrastverzögerung der Phasenverriegelungsschaltung gewählt ist;
- daß bei Einfach-Echosignalen das Monoflop zum Ausrastzeitpunkt ta zwangsweise zurückgesetzt wird und zur Bestimmung der Ankunftzeit dieser Ausrastzeitpunkt ta in der Auswerteschaltung ausgewertet wird, und
- daß bei Mehrfach-Echosignalen das Monoflop erst nach Ablauf seiner Impulsdauer, t1 + Δt, zurückkippt und zur Bestimmung der Ankuftzeit der Einrastzeitpunkt te zuzüglich der einstellbaren Verzögerungszeit t1 + Δt ausgewertet wird.

## Claims

1. Method for determining the time of arrival of a sound pulse transmitted by an electroacoustic transducer (W1,W2) and reflected by an object to said transducer, at which method
- the transducer is excited by a pulse-modulated oscillation signal during predetermined transmitting periods, whereat the carier frequency of the oscillation signal in each transmitting period each is provided during a first modulation period t1 by the eigen frequency f1 of the electoacoustic transducer (W1,W2) and afterwards during a subsequent modulation period t2 is provided by a frequency f2 outside of the eigen frequency f1 of the transducer;
- the electrical output signals, generated by the transducer (W1,W2) during the reception of a reflected sound pulse are fed to a phase locked loop (PLL) the locking range of which being matched to the eigen frequency f1 of the transducer whereat the phase locked loop (PLL) each is locked at the reception of single echo signals as well as at the reception of multiple echo signals at a lock-in point of time te and each is released at the reception of single echo signals at a later release point of time ta when the frequency of the received single echo signals changes from the frequency f1 to the frequency f2; and
- for determining the arrival time of single echo signals the actual release point of time ta is evaluated, **characterized in that** for determining of the arrival time of multiple echo signals the actual lock-in point ot time te plus an adjustable delay time t1 + Δt is evaluated, whereat Δt is chosen corresponding to the longest possible lock-in delay of the phase locked loop (PLL).

2. Method according to claim 1, **characterized in that** the adjustable delay time at least is as large as the first modulation period t1.

3. Apparatus for implementing the method according to claim 1, comprising
an electroacoustical transducer (W1,W2),
a pulse-modulated oscillator (OS) for each exciting the transducer (W1,W2) during predetermined transmitting periods whereat the oscillator (OS) comprises means (SO) for changing over its carrier frequency, so that the carrier frequency in each transmitting period each is provided by the eigen frequency f1 of the electroacoustical transducer (W1,W2) during a first modulation period t1 and afterwards during a subsequent second modulation period t2 is provided by a frequency f2 outside of the eigen frequency f1 of the transducer;
a receiver circuit (V,PLL,A) connected to the transducer for the reception of the electrical oscillation signal delivered by the transducer at the impingement of sound waves, which comprises a phase locked loop (PLL) matched to the eigen frequency f1 of the transducer, whereat the phase locked loop (PLL) each is locked at the reception of single echo signals as well as at the reception of multiple echo signals at a lock-in point of time te and each is released at the reception of single echo signals at a later release point of time ta when the frequency of the received single echo signals changes from the frequency f1 to the frequency f2 and an evaluation circuit (A) for determining the arrival point of time of a sound pulse received by the transducer on the carrier frequency, which for determining the arrival time of single echo signals evaluates the actual release point of time ta,
**characterized in that,**
- between the phase locked loop (PLL) and the evaluation circuit (A) a monoflop (MF) is arranged, the undisturbed pulse duration of which equals an adjustable delay time (t1 + Δt), whereat Δt is chosen corresponding to the longest possible lock-in delay of the phase locked loop;
- at single echo signals the monoflop is forcibly resetted at the release point of time (ta) and for determining the arrival time this release point of time ta is evaluated within the evaluation circuit, and
- at multiple echo signals the monoflop only switches back after expiration of its pulse duration t1 + Δt and for determining of the arrival time the lock-in point of time te plus the adjustable delay time t1 + Δt is evaluated.

## Revendications

1. Procédé pour déterminer le moment d'arrivée d'une impulsion sonore émise par un transducteur électroacoustique (W1, W2) et réfléchie par un objet au transducteur, procédé dans lequel :
- le transducteur est excité pendant des périodes d'émission prédéfinies, avec un signal oscillatoire modulé par impulsions, la fréquence porteuse du signal oscillatoire, au cours de chaque période d'émission, étant chaque fois prédéfinie par la fréquence propre f1 du transducteur électroacoustique (W1,W2) pendant une première durée de modulation t1, et après cela, pendant une seconde durée de modulation t2 succédant à la précédente, par une fréquence f2 différente de la fréquence propre f1 du transducteur;
- les signaux électriques de sortie produits par le transducteur (W1, W2) au cours de la réception d'une impulsion sonore réfléchie, sont amenés à un circuit de verrouillage de phase (PLL), dont la plage de maintien est accordée sur la fréquence propre f1 du transducteur, le circuit de verrouillage de phase (PLL), lors de réception aussi bien de signaux d'écho simple que de signaux d'échos multiples, verrouillant sur le flanc avant des signaux d'écho simple ou des signaux d'échos multiples, à un instant de verrouillage te correspondant, et déverrouillant à un instant de déverrouillage ta ultérieur correspondant lors de la réception de signaux d'écho simple, lors du changement de fréquence des signaux d'écho simple reçus, de la fréquence f1 à la fréquence f2; et
- pour la détermination du moment d'arrivée lors de signaux d'écho simple, on exploite l'instant de déverrouillage ta correspondant,
caractérisé en ce que pour la détermination du moment d'arrivée lors de signaux d'échos multiples, on exploite l'instant de verrouillage te correspondant et en sus un temps de retard t1 + Δt réglable, Δt étant choisi égal au retard de verrouillage le plus long possible du circuit de verrouillage de phase (PLL).

2. Procédé selon la revendication 1, caractérisé en ce que le temps de retard réglable est au moins aussi grande que la première durée de modulation t1.

3. Dispositif pour la mise en oeuvre du procédé selon la revendication 1, avec
un transducteur électroacoustique (W1, W2),
un oscillateur (OS) à modulation par impulsions pour l'excitation du transducteur (W1, W2) pendant des périodes d'émission respectivement prédéfinies, l'oscillateur (OS) présentant des dispositifs (So) pour la commutation de sa fréquence porteuse, de sorte que la fréquence porteuse, au cours de chaque période d'émission, est prédéfinie par la fréquence propre f1 du transducteur électroacoustique (W1,W2) pendant une première durée de modulation t1, et après cela, pendant une seconde durée de modulation t2 succédant à la précédente, par une fréquence f2 différente de la fréquence propre f1 du transducteur;
un circuit de réception (V, PLL, A) raccordé au transducteur, qui est destiné au signal électrique oscillatoire délivré par le transducteur lors de sollicitation avec des ondes sonores, et qui présente un circuit de verrouillage de phase (PLL) accordé sur la fréquence propre f1 du transducteur, le circuit de verrouillage de phase (PLL), lors de la réception aussi bien de signaux d'écho simple que de signaux d'échos multiples, verrouillant sur le flanc avant des signaux d'écho simple ou des signaux d'échos multiples, à un instant de verrouillage te correspondant, et déverrouillant à un instant de déverrouillage ta ultérieur correspondant, lors de la réception de signaux d'écho simple, lors du changement de fréquence des signaux d'écho simple reçus, de la fréquence f1 à la fréquence f2,
et un circuit d'exploitation (A) pour la détermination du moment d'arrivée d'une impulsion sonore reçue par le transducteur sur la fréquence porteuse, qui, pour la détermination de l'instant d'arrivée dans le cas de signaux d'écho simple, exploite l'instant de déverrouillage ta correspondant,
caractérisé
- en ce qu'entre le circuit de verrouillage de phase (PLL) et le circuit d'exploitation (A), est agencée une bascule monostable (MF), dont la durée d'impulsion non perturbée est égale à un temps de retard réglable t1 + Δt, Δt étant choisi égal au retard de verrouillage le plus long possible du circuit de verrouillage de phase;
- en ce que lors de signaux d'écho simple, la bascule monostable est restaurée d'office, à l'instant de déverrouillage ta, et que pour la détermination du moment d'arrivée, cet instant de déverrouillage ta est exploité dans le circuit d'exploitation, et
- en ce que dans le cas de signaux d'échos multiples, la bascule monostable n'est rebasculée qu'après que sa durée d'impulsion t1 + Δt se soit écoulée, et que pour la détermination du moment d'arrivée, on exploite l'instant de verrouillage te et en sus le temps de retard réglable t1 + Δt.
